# EUROPÄISCHE PATENTSCHRIFT

(11) **EP 0 990 822 B1**
(45) Veröffentlichungstag und Bekanntmachung des Hinweises auf die Patenterteilung: **15.01.2003**
(21) Anmeldenummer: 99118395.5
(22) Anmeldetag: 16.09.1999
(51) Int. Cl.: F16J 15/20, F16J 15/22, D02G 3/44

(54) **Dichtungspackung**
Seal packing
Garniture d'étanchéité

(30) Priorität: 02.10.1998 DE 19845442
(43) Veröffentlichungstag der Anmeldung: 05.04.2000
(73) Patentinhaber: Latty, Cyril Xavier, 92210 Saint-Cloud (FR)
(72) Erfinder: Latty, Cyril Xavier, 92210 Saint-Cloud (FR)
(74) Vertreter: Schieschke, Klaus, Dipl.-Ing.

(56) Entgegenhaltungen:
- EP-A- 0 482 489
- EP-A- 0 779 460
- EP-A- 0 790 339
- US-A- 4 559 862

## Beschreibung

Die Erfindung bezieht sich auf eine Dichtungspackung, insbesondere geflochtene Packung.

Derartige geflochtene Packungen stellen nach wie vor günstige Lösungsmöglichkeiten für die verschiedensten Dichtprobleme dar, welche in industriellen Anlagen gefordert werden, wie beispielsweise bei Pumpen, Kompressoren, Ventilen, Mischern, Trommeltrocknern, Verdichtern, Rührwerken. Die Anwendung kann sowohl statisch, halbstatisch oder rotierend sein.

Anwendungsbereiche sind beispielsweise Kraftwerke, Chemie, Petrochemie, Pharmaindustrie sowie die Zellstoff- oder Papierindustrie, Regelelemente, sog. Mannlochringe bei Kesseln, Schaugläsern, Abdichtungen von Behältern, beispielsweise wo gefährliche Stoffe zu transportieren sind und wo eine Leckage beim Transport sehr gefährlich sein kann.

Als Stand der Technik ist bereits ein Garn bekannt, welches aus einer engen Mischung von Kohlenstofffasern mit Aramidfasern besteht (Lattyflon 4488). Es wird hierbei eine geflochtene Packung erstellt, welche sowohl die mechanischen Eigenschaften von Aramid als auch die Wärmeleitfähigkeit von Kohlenstoff vereint. Dieses Garn wird beispielsweise in einem PTFE- und Gleitmittelbad geflochten. Es wird damit eine besonders feste, dichte und elastische Packung mit sehr guten mechanischen und chemischen Eigenschaften erzielt.

Diese bekannte Dichtungspackung besitzt jedoch eingeschränkte Anwendungsbereiche und ist damit nicht geeignet, auf ganz speziellen Anwendungsgebieten eingesetzt zu werden.

Zum weiteren Stand der Technik zählt ein aus mehren Komponenten bestehendes Garn, das auf einer Webmaschine weiterverarbeitet wird (EP-A-0 790 339). Weiterhin ist ein aus ungebrochenen Stahlfilamenten and ungebrochenen Filamenten anderen Materials bestehendes Garn bekannt (EP-A-0 482 489 A1).

Entsprechend liegt der vorliegenden Erfindung die Aufgabe zugrunde, Dichtungspackungen zu schaffen, welche genau auf jeden der eingangs genannten Anwendungsbereiche zugeschnitten sind und jeweils eine optimale Lösungsmöglichkeit darstellt.

Diese Aufgabe wird erfindungsgemäß dadurch gelöst, dass das Garn entsprechend mechanischer, thermischer, chemischer und/oder verschleißfester Kriterien aus mindestens drei verschiedenen Faserkomponenten zusammengesetzt ist, wobei der Durchmesser der Fasern zwischen 6µ und 22µ liegt und die Zusammensetzung aus max. 60% der einen Faserkomponente und min. 5% einer anderen Faserkomponente besteht. Hierdurch ergibt sich der Vorteil, dass die jeweils günstigsten Eigenschaften der einen Faserkomponente mit der jeweils anderen Faserkomponente kombiniert werden, wobei beispielsweise max. sechs verschiedene Faserkomponenten Anwendung finden können. Es entstehen damit sog. Multifaser-Garne, welche genau auf den jeweiligen Einsatzbereich abgestellt werden können. Der Einsatz von mindestens drei Fasern bei der Konzeption und Herstellung einer Dichtungspackung erlaubt damit, die endgültigen Eigenschaften des so produzierten Garnes bzw. der Packung erheblich zu verbessern.

Beispielsweise positive Eigenschaften sind:
- Bei Kohlenfasern und Graphitfasern (also nach DCI zwischen 75 bis 99,9% Kohlegehalt) gute Wärmeabfuhr,
- bei PTFE-Fasern gute Schmier- und chemische Beständigkeitseigenschaften,
- bei Aramid-Fasern sehr hohe mechanische Eigenschaften, wie beispielsweise Zerreißfestigkeit,
- bei Kynol-Fasern hohe Temperaturbeständigkeit, sowie die Eigenschaft, bei einem längeren Zeitraum oder dauernd höheren Temperaturen zu verkohlen. Bei einer Mischung von Kohlefasern und Kynol-Fasern werden damit optimale Werte sowohl bei der Temperaturbeständigkeit als auch bei der Wärmeabfuhr erreicht.

Beispielsweise lassen sich folgende Fasern, wie Kohlefaser, Aramid-Faser und feine Metallfaser (wie Inconel-Faser) auswählen und mit einem als Zerreißverfahren bezeichneten Spezialspinnverfahren verspinnen. Man erhält damit ein Garn, dessen Festigkeit, Wärmeabfuhr und Temperaturbeständigkeit wesentlich besser ist als ein mit nur einer Faser hergestelltes Garn.

Man kann folgende Kriterien erstellen:

| | | |
|---|---|---|
| 1 | mechanisch | Zerreißfestigkeit |
| 2 | thermisch | Wärmeabfuhr |
| 3 | mechanisch | dynamischer Reibungskoeffizient |
| 4 | thermisch | Temperaturbeständigkeit |
| 5 | Verschleiß | Imprägnierungsfaktor-Aufnahmefähigkeit |
| 6 | mechanisch | Elastizitätsstabilität im Einsatz |
| 7 | mechanisch | verringerter Schrumpf |
| 8 | mechanisch | Drehkoeffizient |
| 9 | chemisch | chemische Beständigkeit |
| 10 | mechanisch | Dehnung |

Weiterhin lässt sich folgende Klassifizierung vornehmen:
- E: ausgezeichnet
- B: gut
- M: mangelhaft

Fasst man die vorgenannten Kriterien zusammen, so lässt sich im Rahmen der vorliegenden Erfindung beispielsweise folgende Tabelle aufstellen:

| No. | Kohle Grafit | Aramid | Kynol | Inconel | Inox | Alu Sil | Acryl | Zel | PBI | PBO | PTFE | PVA |
|---|---|---|---|---|---|---|---|---|---|---|---|---|
| 1 | B | E | M | E | E | M | B | B | M | E | B | M |
| 2 | E | B | E | E | E | M | M | M | M | B | M | M |
| 3 | E | B | E | M | M | M | B | B | B | B | E | B |
| 4 | E | B | E | E | E | E | M | M | E | E | B | M |
| 5 | E | E | E | M | M | M | E | E | E | E | B | B |
| 6 | E | B | B | E | E | E | M | M | B | B | M | B |
| 7 | E | E | E | E | E | E | B | M | E | E | M | M |
| 8 | E | E | B | M | M | M | E | E | E | E | E | E |
| 9 | B | E | M | E | E | E | M | M | M | E | M | M |
| 10 | E | E | B | B | E | E | B | B | E | B | E | B |

Anhand der vorstehenden Tabelle lässt sich erfindungsgemäß eine Dichtungspackung erstellen, deren Garn entsprechend mechanischer, thermischer, chemischer und/oder verschleißfester Anforderungen analog der vorgenannten Kriterien 1-10 aus mindestens drei verschiedenen Faserkomponenten zusammengesetzt ist.

Die Erfindung wird nachfolgend anhand von Ausführungsbeispielen und Tabellen näher beschrieben:

### Beispiel 1

### Dreifasergarn: Hochwertige Packung für Ofentüren

| % Kohle | % PBO | % Inconel |
|---|---|---|
| 100 | | |
| 080 | 10 | 10 |
| 60 | 25 | 15 |
| 50 | 30 | 20 |
| 40 | 40 | 20 |
| 20 | 55 | 15 |
| 00 | 55 | 15 |

Geht man bei dem vorliegenden Auführungsbeispiel von einem Mischungsverhältnis von 50% Kohle, 30% PBO sowie 20% Inconel aus, so erhält man eine hochwertige Packung für Ofentüren, bei welchen früher die Standzeit nicht für einen Prozess ausreichte. Erfindungsgemäß werden nunmehr Standzeiten von mindestens 3-mal der früheren Standzeit bei der besten Zweifaserpackung (Stand der Technik) ermittelt. Weiterhin wurde eine verbesserte Wärmeabfuhr sowie ein verbesserter Reibungsfaktor erzielt. Darüber hinaus ist eine Verbesserung der chemischen Beständigkeit erreicht worden.

### Beispiel 2:

### Vierfasergarn für Kernkraftswerkdampfventile bei höheren Temperaturen und höheren Drücken

| % Kohle | Kynol∗ | Aramid | % Inconel |
|---|---|---|---|
| 60 | 15 | 15 | 10 |
| 50 | 25 | 15 | 10 |
| 50 | 25 | 10 | 15 |
| 40 | 30 | 15 | 15 |
| 60 | 20 | 10 | 10 |
| 60 | 15 | 15 | 10 |

Geht man von 40% Kohle, 30% Kynol, 15% Aramid und 15% Inconel aus, so weist dieses Multifasergarn eine sehr gute Wärmeabfuhr, sehr gute mechanische Homogenität und Elastizität, eine optimale Druckstandsfestigkeit sowie eine hervorragende Rückfederung auf. Die Aramid- und Kynolfasern spielen hierbei eine sehr wichtige Rolle bei der Erhaltung der Eigenschaften der Kohlefasern; sie vermeiden den möglichen frühzeitigen Bruch der Kohlefaser unter dem Druck und wirken außerdem als Vibrationsdämpfer.

### Beispiel 3:

### Anwendung: Rührwerke mit großem Durchmesser - Trommeltrockner

| % Kohle | % Aramid | % Rayon |
|---|---|---|
| 100 | | |
| 60 | 30 | 10 |
| 50 | 40 | 10 |
| 50 | 35 | 15 |
| 40 | 45 | 15 |
| 40 | 40 | 20 |

Hier wird eine Multifaser geschaffen mit 40% Kohleanteil, 40% Aramidanteil und 20% Rayonanteil.

Während die vorgenannten Ausführungsbeispiele Drei- bzw. Vierfasergarn umfassten, soll das nachfolgende Beispiel die Möglichkeit der Herstellung eines Fünffasergarnes beschreiben.

### Beispiel 4:

| % Kohle | % Kynol | % Aramid | % Acryl | % Rayon |
|---|---|---|---|---|
| 55 | 15 | 15 | 7,5 | 7,5 |
| 50 | 20 | 20 | 5 | 5 |
| 50 | 35 | 10 | 5d | |

Hier wird eine Dichtungswirkung geschaffen, welche besonders gute Schmiereigenschaften aufweist.

Dieses Beispiel ist sehr aufschlussreich; es beweist nämlich, dass zusätzliche Komponenten, wie Acryl und Rayon in begrenzten Mengen dazu beitragen, Öle und Schwermittel aufzunehmen, wobei die ersten drei Fasern die aktiven mechanischen Komponenten sind. Insgesamt erreicht man damit eine längere Lebensdauer.

Ein weiteres Beispiel für die Nahrungsmittel- bzw. Pharmaindustrie ergibt sich auf Folgendem:

### Beispiel 5:

| % PTFE | % Aramid | % Acryl | % Rayon |
|---|---|---|---|
| 40 | 40 | 10 | 10 |
| 60 | 10 | 15 | 15 |
| 60 | 20 | 10 | 10 |
| 40 | 40 | 10 | 10 |
| 20 | 50 | 15 | 15 |

Vorstehende Beispiele zeigen, dass z. B. fünf verschiedene Faserkomponenten des Garns Anwendung finden können. Zur Herstellung der Dichtungspackung können an sich bekannte Zerreißverfahren bzw. Flechtverfahren Anwendung finden. Weiterhin besteht die Möglichkeit des Einsatzes von Zusatzmitteln zu dem Garn zur Verbesserung der Schmiereigenschaften, der Antikorrosion sowie der Dichteigenschaften. Darüber hinaus ergibt sich die Möglichkeit eines Verbindungsgarns mit weiteren Garnen vor oder während des Flechtverfahrens.

## Patentansprüche

1. Dichtungspackung, deren Garn entsprechend mechanischer, thermischer, chemischer und/oder verschleißfester Kriterien aus mindestens drei verschiedenen Faserkomponenten zusammengesetzt ist, wobei der Durchmesser der Faser zwischen 6µ und 22µ liegt, und die Zusammensetzung aus maximal 60% der einen Faserkomponente und minimal 5% einer anderen Faserkomponente besteht, wobei das Garn durch ein an sich bekanntes Zerreiss verfahren dieser Faserkomponenten erzeugt ist.

2. Dichtungspackung nach Anspruch 1, **gekennzeichnet durch** maximal sechs verschiedene Faserkomponenten des Garns.

3. Dichtungspackung nach Anspruch 1 oder 2, **gekennzeichnet durch** den Einsatz von Kohlenstoff, Aramid-Fasern, PTFE-Fasern, keramischen Fasern, metallischen Fasern (wie z. B. Inconel, rostfreie Fasern oder Superlegierungen, Melaminfasern, Polyarylat-Fasern und PBD), Acryl-Fasern, Rayon, Zellulose-Fasern, Vegetal-Fasern, Whiskers.

4. Dichtungspackung nach einem oder mehreren der vorhergehenden Ansprüche, **gekennzeichnet durch** Zusatzmittel zu dem Garn zur Verbesserung der Schmiereigenschaften, der Anti-Korrosion sowie der Dichteigenschaften.

5. Dichtungspackung nach einem oder mehreren der vorhergehenden Ansprüche, **gekennzeichnet durch** Verbindung des Garns mit weiteren Garnen vor oder während des Flechtverfahrens.

## Claims

1. Packing yarn the composition of which is based on a minimum of three fibrous components chosen along criteria of mechanical, thermal, chemical and / or wear resistance nature,
whereas the diameter of the fibres is between 6 µ and 22 µ and the yarn has a composition of maximum 60 % of one fibre and a minimum of 5 % of another
whereas the yarn is manufactured using a known process: stretch breaking of these fibrous components.

2. Packing according to claim 1 **characterised by** a maximum of six different fibrous components;

3. Packing according to claim 1 or 2 **characterised by** the use of carbon fibres, aramide fibres, PTFE fibres, ceramic fibres, metallic fibres (as for instance Inconel, stainless steel or superalloys, melamin fibres, Polyarylat fibres and PBD) acryl fibres, Rayon, cellulosic fibres, vegetable fibres, whiskers.

4. Packing according to one or many of these claims, **characterised by** the addition to the yarn of various elements to enhance the lubricating properties, the anticorrosion properties as well as the sealing efficiency.

5. Packing according one or many of these claims **characterised by** the addition to the yarn of other yarns before or during the braiding process.

## Revendications

1. Garniture d'étanchéité dont le fil correspondant à des critères mécaniques, thermiques, chimiques ou/et de résistance à l'usure est contitué d'au moins trois composants fibreux,
le diamètre des fibres se situant entre 6 µ et 22 µ et la composition comprenant au maximum 60 % d'un composant fibreux et au moins 5 % d'un autre composant fibreux,
le fil étant réalisé à partir d'un procédé de fabrication connu, dit procédé de craquage des dites fibres composantes.

2. Garniture d'étanchéité selon la revendication 1, **caractérisée par** un maximum de six fibres différentes dans sa composition.

3. Garniture d'étanchéité selon la revendication 1 ou 2, **caractérisée par** l'emploi de fibres de carbone, de fibres d'aramide, de fibres de PTFE, de fibres de céramique, de fibtres métalliques (comme par exemple de fibres d'Inconel, de fibres inoxydables ou de superalliages, de fibres de mélamine, de fibres de polyarylates et PBD), de fibres acryliques, de fibres de rayonne, de fibres de cellulose, de fibres végétales, de whiskers.

4. Garniture d'étanchéité selon une ou plusieurs des revendications précédentes **caractérisée par** des additifs au fil pour en améliorer les propriétés lubrifiantes, l'anti-corrosion, ainsi que les propriétés d'étanchéité.

5. Garniture d'étanchéité selon une ou plusieurs des revendications précédentes, **caractérisée par** la combinaison du fil avec d'autres fils avant ou pendant le processus de tressage.
